# EUROPEAN PATENT APPLICATION

(11) **EP 4 129 109 A1**
(43) Date of publication of application: **08.02.2023**
(21) Application number: 22187744.2
(22) Date of filing: 29.07.2022
(51) Int. Cl.: A43C 13/04, A43C 15/16, B29D 35/12

(54) **METHOD FOR MANUFACTURING A TRACTION ELEMENT USING A CORING PROCESS**

(30) Priority: 03.08.2021 US 202117393092
(71) Applicant: Pride Manufacturing Company, LLC, Brentwood, Tennessee 37027 (US)
(72) Inventor: BURT, John, Brentwood (US); SHUTTLEWORTH, Lee, Brentwood (US)
(74) Representative: Hutter, Anton

(57) **Abstract**

Various embodiments for a traction element used with athletic shoes having a stud body with a metal insert that extends axially from the stud body and methods for manufacturing such traction elements are disclosed.

## Description

### CROSS REFERENCED TO RELATED APPLICATIONS

This is a continuation-in-part of U.S. non-provisional application serial no. 16/290,460 filed on March 1, 2019 that claims benefit to U.S. provisional application serial no. 62/637,259 filed on March 1, 2018, which is herein incorporated by reference in its entirety.

### FIELD

The present disclosure generally relates to traction elements for shoes, and particularly to a method of manufacturing a traction element using a coring process.

### BACKGROUND

Traction elements for athletic shoes are used to provide a gripping surface that produces traction between the sole of the shoe and the athletic surface, such as a grass field. Typically, traction elements for athletic shoes used in sports, such as rugby, use metal studs made of a metallic material to accommodate the high shear forces applied to the metal studs during play. As such, it is desirable to improve on conventional methods of manufacturing such traction elements, while still meeting all the performance, shape specifications and material requirements required by various official sports authorities.

Current technologies tend to rely on boring or drilling out material from within a formed stud body following casting in order to remove excess material from the traction element. This process can be time-consuming when waiting for a formed stud body to cool, and can waste material when drilling, boring, or otherwise removing casted material from the stud body. Further, a boring or drilling step can require an extra step in the manufacturing process and can also require regular sharpening or replacing of drilling or boring tools.

It is with these observations in mind, among others, that various aspects of the present disclosure were conceived and developed.

### BRIEF DESCRIPTION OF THE DRAWINGS

FIG. **1** is a top perspective view of a first embodiment of a traction element showing the stud body and metal insert;
FIG. **2** is a rear perspective view of the traction element of FIG. **1** showing the metal insert extending from the interior cavity of the stud body;
FIG. **3** is an exploded view of the traction element of FIG. **1****;**
FIG. **4** is a side view of the traction element of FIG. **1****;**
FIG. **5** is a top view of the traction element of FIG. **1****;**
FIG. **6** is a bottom view of the traction element of FIG. **1****;**
FIG. **7** is a cross-sectional view of the traction element taken along line **7-7** of FIG. **5****;**
FIG. **8** is a top perspective view of a second embodiment of a traction element showing the stud body and metal insert;
FIG. **9** is a rear perspective view of the traction element of FIG. **8** showing the metal insert extending from the interior cavity of the stud body;
FIG. **10** is an exploded view of the traction element of FIG. **8****;**
FIG. **11** is a side view of the traction element of FIG. **8****;**
FIG. **12** is a top view of the traction element of FIG. **8****;**
FIG. **13** is a bottom view of the traction element of FIG. **8****;**
FIG. **14** is a cross-sectional view of the traction element taken along line **14-14** of FIG. **12****;**
FIG. **15** is top perspective view of a third embodiment of a traction element showing the stud body and metal insert;
FIG. **16** is a rear perspective view of the traction element of FIG. **15** showing the steel insert extending from the cavity of the traction element;
FIG. **17** is an exploded view of the traction element of FIG. **15****;**
FIG. **18** is a side view of the traction element of FIG. **15****;**
FIG. **19** is a top view of the traction element of FIG. **15****;**
FIG. **20** is a bottom view of the traction element of FIG. **15****;**
FIG. **21** is a cross-sectional view of the traction element taken along line **21-21** of FIG. **19****;** and
FIG. **22** is a cross-sectional view showing a tool apparatus for manufacture of the traction element of FIG. **1****;**
FIGS. **23A-23I** are a series of cross-sectional views illustrating a process for manufacture of the traction element using the tool apparatus of FIG. **22****;**
FIGS. **24A-24E** are a series of cross-sectional views illustrating an alternate movement configuration during manufacture of the traction element using the tool apparatus of FIG. **22****;**
FIGS. **25A** and **25B** are respective isometric and cross-sectional isometric views showing a holding steel component of the tool apparatus of FIG. **22****;**
FIGS. **26A** and **26B** are respective isometric and cross-sectional isometric views showing a core steel component of the tool apparatus of FIG. **22****;**
FIGS. **27A** and **27B** are respective isometric and cross-sectional isometric views showing an ejector sleeve component of the tool apparatus of FIG. **22****;**
FIGS. **28A** and **28B** are respective isometric and cross-sectional isometric views showing a lower tool component of the tool apparatus of FIG. **22****;** and
FIGS. **29A** and **29B** are respective below and cross-sectional isometric views showing an upper tool component of the tool apparatus of FIG. **22****;**
FIG. **30** is a cross-sectional side view illustrating a runner of the tool apparatus of FIG. **22** collectively formed by the upper component and the lower component; and
FIG. **31** is a flowchart showing a method of manufacture of a traction element using the tool apparatus of FIG. **22****.**

Corresponding reference characters indicate corresponding elements among the view of the drawings. The headings used in the figures do not limit the scope of the claims.

### DETAILED DESCRIPTION

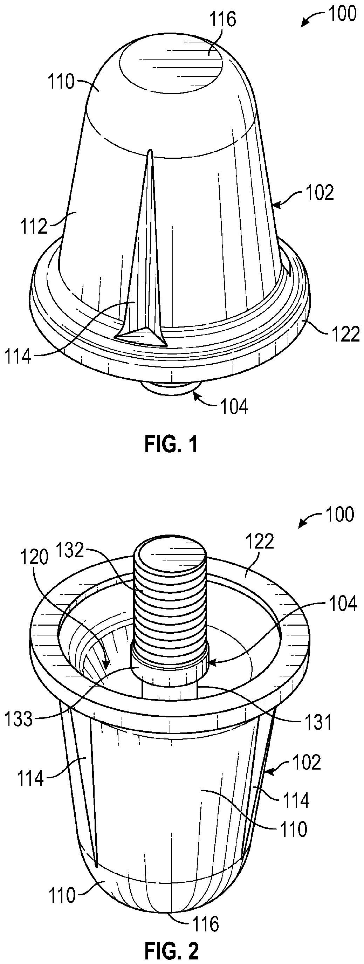

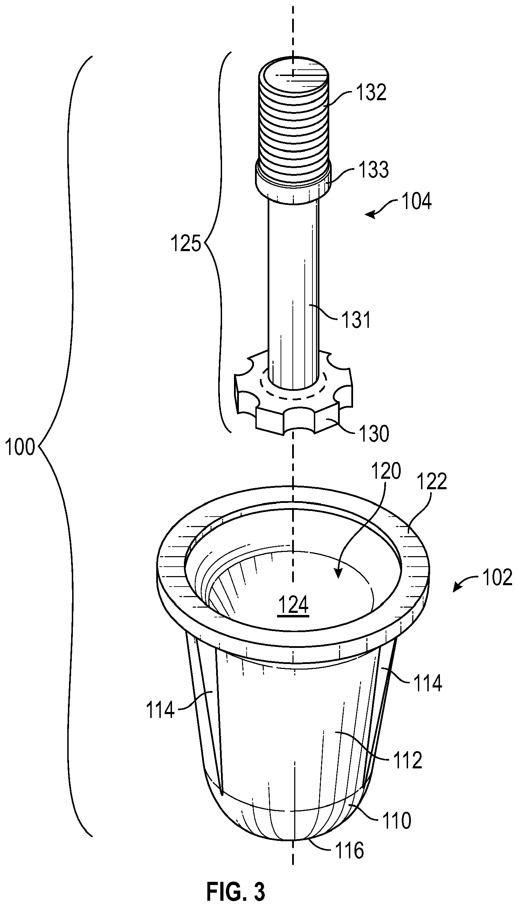

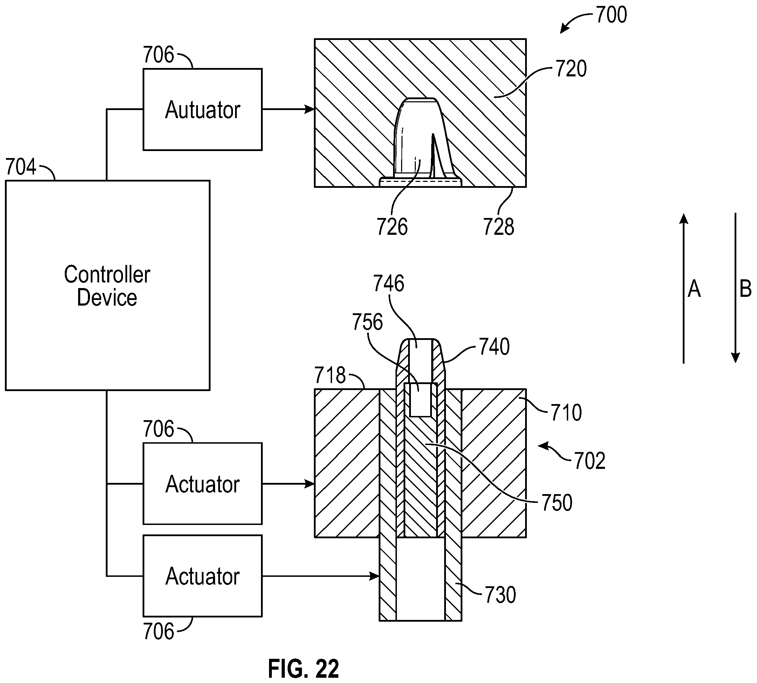

Various embodiments for traction elements used for athletic shoes are disclosed herein. In some embodiments, the traction elements have reduced weight while still meeting existing industry performance standards for athletic shoes. In some embodiments, the traction element includes a stud body defining an interior cavity with a metal insert that is cast to the stud body and extends outwardly from hollow cavity. In some embodiments, the metal insert of the traction element is configured to be coupled to the sole of an athletic shoe for providing traction. In some embodiments, a method of manufacturing the traction element such that the metal insert is either cast to the stud body or mechanically coupled to the stud body prior to being engaged to the sole of an athletic shoe is disclosed. In one aspect, the stud body can be manufactured using a novel coring process in which a casting material is injected into a casting cavity around the metal insert. The interior cavity of the stud body is formed during the coring process by a core steel component. The casting material fills the casting cavity around the core steel component, thus forming the interior cavity of the traction element by coring rather than boring or drilling away at the stud body to remove casting material. In some embodiments, the metal insert includes a bulbous middle portion that engages a plastic or like material retainer within the interior cavity of the stud body to provide further structural integrity between the metal insert and the stud body when the traction element is engaged to an athletic shoe. In one aspect, the traction element meets the current standards required of official governing sports bodies, such as the ROC, which governs international rugby regarding the performance, shape and material requirements set for athletic equipment, such as rugby studs used in athletic shoes including the traction element described herein. Referring to the drawings, various embodiments of a traction element used with athletic shoes are illustrated and generally indicated as **100, 200** and **300** in FIGS. **1-21****.** Various embodiments of a method of manufacturing the traction element are illustrated and generally indicated as **700** and **800** in FIGS. **22-31****.**

Referring to FIGS. **1-7****,** a first embodiment of the traction element, designed **100,** is illustrated. In some embodiments, the traction element **100** includes a stud body **102** having a generally thimble-shaped body configured to provide traction and gripping strength along a ground surface when attached to the sole of an athletic shoe. In some embodiments, the stud body **102** includes a metal insert **104** that is cast to the stud body **102** during manufacture and is aligned along the longitudinal axis **A** of the stud body **102.** The metal insert **104** is configured to mechanically couple the traction element **100** to the sole of an athletic shoe (not shown). Referring specifically to FIGS. **2-4****,** **6** and **7****,** the stud body **102** defines a distal head portion **110** and a proximal end portion **112.** In some embodiments, the proximal end portion **112** of the stud body **102** gradually tapers away from the distal head portion **110** and forms a peripheral flange **122** that defines an opening **118** in communication with an interior cavity **120** formed within the stud body **102** during manufacture. As further shown, the distal head portion **110** defines a top end **116** of the traction element **100** that is configured to provide a traction surface along the sole of an athletic shoe (not shown) when the traction element **100** engages the ground or other athletic surface.

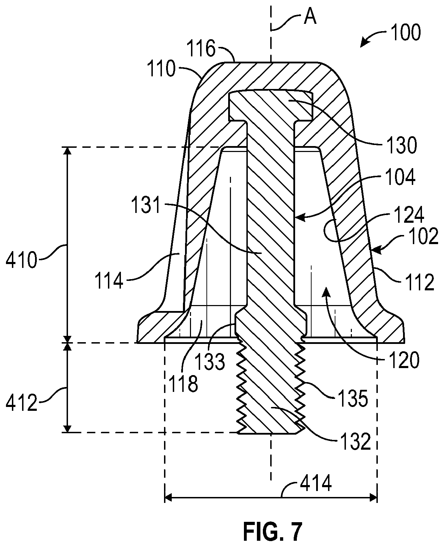

Referring to FIG. **7****,** in some embodiments the metal insert **104** is made of steel and/or aluminum that forms an elongated body **125** defining a distal cap **130,** which is cast to the stud body **102** during manufacture. In addition, the distal cap **130** communicates with a shaft portion **131** of the metal insert **104** that extends between the distal cap **130** and a proximal threaded portion **132** of the metal insert **104.** As shown, the proximal threaded portion **132** defines external threads **135** configured to couple with internal threads (not shown) formed within each respective threaded engagement point defined along the sole of an athletic shoe (not shown). In some embodiments, the metal insert **104** further defines a bulbous portion **133** that is formed between the shaft portion **131** and the proximal threaded portion **132** that provides an engagement surface for a retainer or liner disposed inside the internal cavity **120** to provide structural reinforcement between the stud body **102** and the metal insert **104** as shall be discussed in greater detail below with respect to traction element **200.**

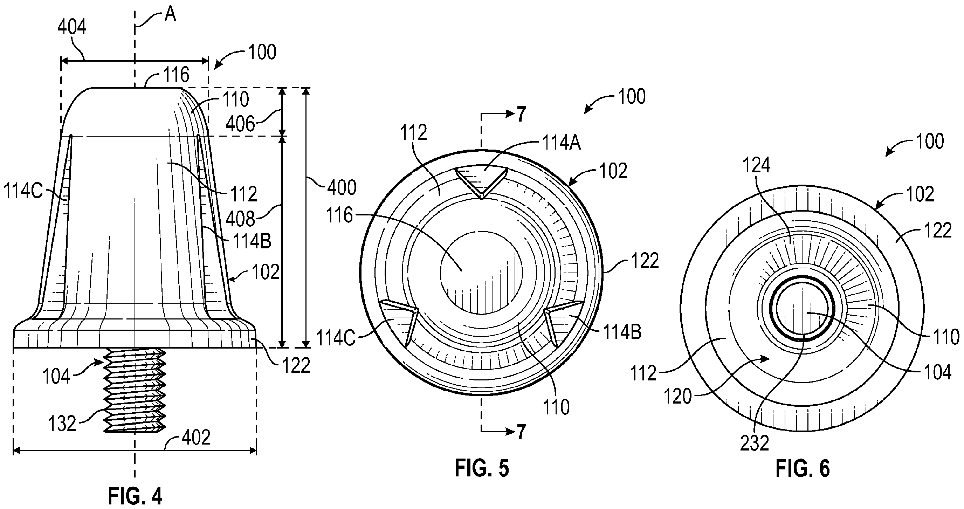

As shown specifically in FIGS. **4** and **5****,** in some embodiments a plurality of cutaways **114** may be formed axially along the outer surface of the stud body **102.** The plurality of cutaways **114** may be collectively configured to receive a driving tool (not shown), such as a cleat wrench, that engages each respective cutaway **114** such that rotation of the cleat wrench causes the stud body **102** to be manually rotated as the metal insert **104** becomes fully engaged to the threaded engagement point along the sole of the athletic shoe. Referring specifically to FIG. **5****,** in some embodiments the stud body **102** may define three respective cutaways, **114A, 114B** and **114C** that each extend a distance axially along the surface of proximal end portion **112** of the stud body **102** and are spaced equidistantly relative to each other at a **120** degree angle. In other embodiments, two or more cutaways **114** may be formed to engage the cleat wrench when securing the traction element **100** to the sole of the athletic shoe. In some embodiments, each cutaway **114** forms an elongated slot configuration forming a base proximate the peripheral flange **122** of the stud body **102** that extends the length of the proximal end portion **112** and gradually tapers to an apex formed at the top of each cutaway **114.** In other embodiments, the plurality of cutaways **114** may define a triangularly-shaped slot, a rectangular-shaped slot, a symmetrically-shaped slot, an asymmetrically-shaped slot, a circular-shaped slot, or a combination thereof.

In one method of manufacturing the traction element **100,** the stud body **102** may be first cast from a metallic material, such as aluminum, in which the metal insert **104** is directly cast to the stud body **102** such that the proximal threaded portion **132** of the metal insert **104** extends partially outward from the cast of the stud body **102.** The interior cavity **120** is formed inside the stud body **102** by coring the interior portion of the stud body **102** around the metal insert **104** to form the interior cavity **120** and, in some embodiments, an opening **118** according to method **800** as is discussed in FIGS. **22-31****.** In some embodiments, the plurality of cutaways **114** are formed when the stud body **102** is cast within a mold, or in the alterative, the plurality of cutaways **114** may be machined out along the surface of the proximal end portion **112** after the cast of the stud body **102** is allowed to sufficiently cool. The method of manufacturing the traction element **100** as disclosed herein provides a strong structural connection between the stud body **102** and the metal insert **104** such that shear forces applied to the traction element **100** during use do not cause the metal insert **104** to break, bend or twist relative to the stud body **102.**

In one aspect, the coring out of stud body **102** to form the interior cavity **120** during manufacture reduces the overall weight and cooling time of the traction element **100** while still allowing the traction element **100** to meet all performance, shape specifications and material requirements required of a conventional traction element.

In some embodiments, the traction element **100** may be manufactured with the following dimensions used during manufacture. Referring to FIG. **4****,** the stud body **102** may have an overall length **400** of 20.8 mm and a width **402** of 19.4 mm. As further shown, the distal head portion **110** of the stud body **102** may have a width **404** of 11.9 mm and a length **406** of 4 mm, while the proximal end portion **112** of the stud body **102** may have a length **408** of 16.8 mm and a width **402** of 20.8 mm. Referring back to FIG. **7****,** the interior cavity **120** of the stud body **102** may have a length **410** of 14.6 mm and the opening **118** of the interior cavity **120** may have a length **414** of 9.0 mm. After the metal insert **104** is cast with the stud body **102,** the proximal threaded portion **132** of the metal insert **104** is centered along the longitudinal axis **A** of the stud body **102** and extends outwardly from the opening **118** of the stud body **102** at a distance **412** of 6.0 mm. The present disclosure contemplates that the dimensions of the stud body **102** and the metal insert **104** may vary to accommodate different shapes and sizes of traction elements used for different types of athletic shoes.

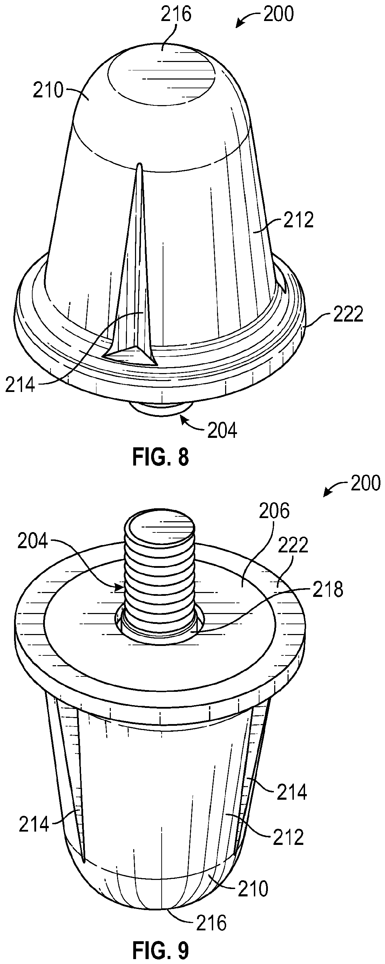

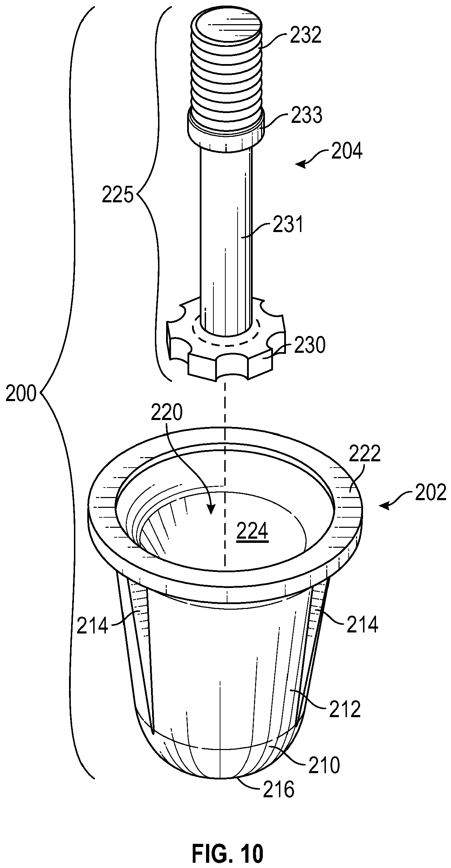

Referring to FIGS. **9-14****,** a second embodiment of the traction element, designated **200,** is illustrated. In some embodiments, the traction element **200** includes a hollow stud body **202** having a generally thimble-shaped body configured to provide traction and gripping strength along a ground surface when attached to the sole of an athletic shoe. In some embodiments, the stud body **202** includes a metal insert **204** that is cast to the stud body **202** during manufacture and is aligned along the longitudinal axis **A** of the stud body **202.** The metal insert **204** is configured to mechanically couple the traction element **200** to the sole of an athletic shoe (not shown). Referring specifically to FIGS. **10-12****,** **13** and **14****,** the stud body **202** defines a distal head portion **210** and a proximal end portion **212.** In some embodiments, the proximal end portion **212** of the stud body **202** gradually tapers away from the distal head portion **210** and forms a peripheral flange **222** that defines an opening **218** in communication with an interior cavity **220** defining an interior surface **224** formed within the stud body **202.** As further shown, the distal head portion **210** defines a top end **216** of the traction element **200** that is configured to provide a traction surface along the sole of the athletic shoe when the traction element **200** engages the ground or other athletic surface.

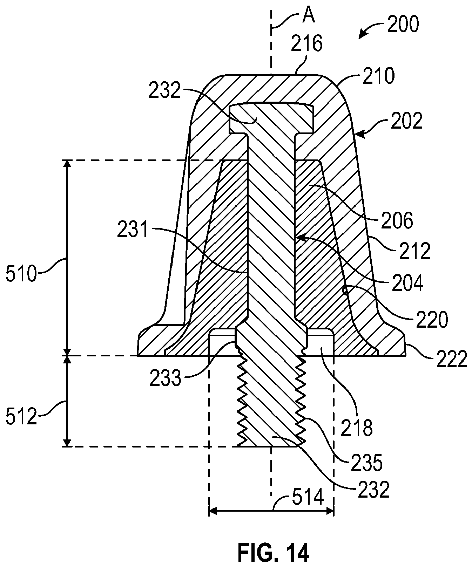

Referring to FIG. **14****,** in some embodiments the metal insert **204** is made of steel and/or aluminum that forms an elongated body **225** defining a distal cap **230,** which is cast to the stud body **202** during manufacture. In addition, the distal cap **230** communicates with a shaft portion **231** of the metal insert **204** that extends between the distal cap **230** and a proximal threaded portion **232** of the metal insert **204.** As shown, the proximal threaded portion **232** defines external threads **235** configured to couple with internal threads (not shown) formed within each respective engagement point defined along the sole of an athletic shoe (not shown). As shown in FIGS. **9** and **14****,** in some embodiments the metal insert **204** further defines a bulbous portion **233** that is formed between the shaft portion **231** and the proximal threaded portion **232** and provides an engagement surface for contacting a retainer **206** made of a filler material, such as nylon, that is disposed inside the interior cavity **220** during manufacture. The retainer **206** is configured to provide further structural reinforcement between the stud body **202** and the metal insert **204** as shall be discussed in greater detail below.

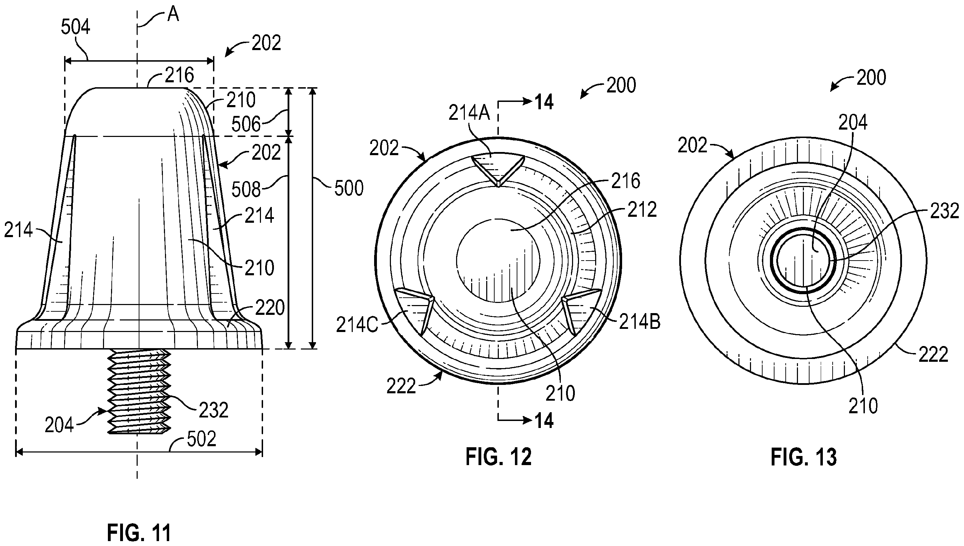

As shown specifically in FIGS. **11** and **12****,** in some embodiments a plurality of cutaways **214** may be formed axially along the outer surface of the stud body **202.** The plurality of cutaways **214** may be collectively configured to receive a driving tool (not shown), such as a cleat wrench, that engages each respective cutaway **214** such that rotation of the driving tool causes the stud body **202** to be manually rotated as the metal insert **204** becomes fully engaged to the sole of the athletic shoe. Referring specifically to FIG. **12****,** in some embodiments the stud body **202** may define three respective cutaways, **214A, 214B** and **214C** that each extend a distance axially along the surface of proximal end portion **212** and are spaced equidistantly relative to each other at a **120** degree angle. In other embodiments, two or more cutaways **214** may be formed along the stud body **202** to engage the driving tool when coupling the traction element **200** to the sole of the athletic shoe. In some embodiments, each cutaway **214** forms an elongated slot configuration forming a base proximate the peripheral flange **222** of the stud body **202** and two opposing sides that extend the length of the proximal end portion **212** and gradually taper to an apex formed at the top of each cutaway **214.** In other embodiments, the plurality of cutaways **214** may define a triangularly-shaped slot, a rectangular-shaped slot, a symmetrically-shaped slot, an asymmetrically-shaped slot, a circular-shaped slot, or a combination thereof.

In one method of manufacture, the stud body **202** of the traction element **200** may be cast from a metallic material, such as aluminum, in which the metal insert **204** is directly cast to the stud body **202** such that the proximal threaded portion **232** of the metal insert **204** extends partially outward from the cast of the stud body **202.** The interior cavity **220** is formed inside the stud body **202** by coring out the interior portion of the stud body **202** around the metal insert **204** to form the interior cavity **220** and in some embodiments, the opening **218** according to method **800** as is illustrated in FIGS. **22-31****.** Once the interior cavity **220** is formed, nylon or other type of filler material to form the retainer **206** is injected, poured or inserted into interior cavity **220** that surrounds the metal insert **204** to provide further structural integrity between the stud body **202** and the metal insert **204.** During the injection of the filler material into the interior cavity **220,** the bulbous portion **233** is configured to provide a retention feature that adds further structural reinforcement between the stud body **202** and the metal insert **204.** In some embodiments, the plurality of cutaways **214** are formed when the stud body **202** is cast within a mold, or in the alterative, the plurality of cutaways **214** may be machined out along the surface of the proximal end portion **212** after the cast of the stud body **202** is allowed to sufficiently cool. The method of manufacturing the traction element **200** as disclosed herein provides a strong structural connection between the stud body **202** and the metal insert **204** such that shear forces applied to the traction element **200** during a sporting activity do not cause the metal insert **204** to break, bend or twist relative to the stud body **202.**

In one aspect, as noted above the coring out of stud body **202** to form the interior cavity **220** during manufacture reduces the overall weight and cooling time of the traction element **200** while still allowing the traction element **200** to meet all performance, shape specifications and material requirements required of a conventional traction element for an athletic shoe.

In some embodiments, the traction element **200** may be manufactured with the following dimensions. Referring to FIG. 11, the stud body **202** may have an overall length **500** of 20.8 mm and a width **502** of 19.4 mm. As further shown, the distal head portion **210** of the stud body **202** may have a width **504** of 11.9 mm and a length **506** of 4.0 mm, while the proximal end portion **212** of the stud body **202** may have a length **508** of 16.8 mm and a width **502** of 20.8 mm. Referring back to FIG. **14****,** the hollow cavity **220** of the stud body **202** may have a length **510** of 14.6 mm and the opening **218** of the interior cavity **220** may have a length **514** of 9.0 mm. After the metal insert **204** is cast with the stud body **202** and the retainer **206** disposed within the internal cavity **220,** the proximal threaded portion **232** of the metal insert **204** will be centered along the longitudinal axis **A** of the stud body **204** and extend outwardly from the opening **218** of the stud body **202** at a distance **512** of 6.0 mm. The present disclosure contemplates that the dimensions of the stud body **202** and the metal insert **204** may vary to accommodate different shapes and sizes of traction elements used for different types of athletic shoes.

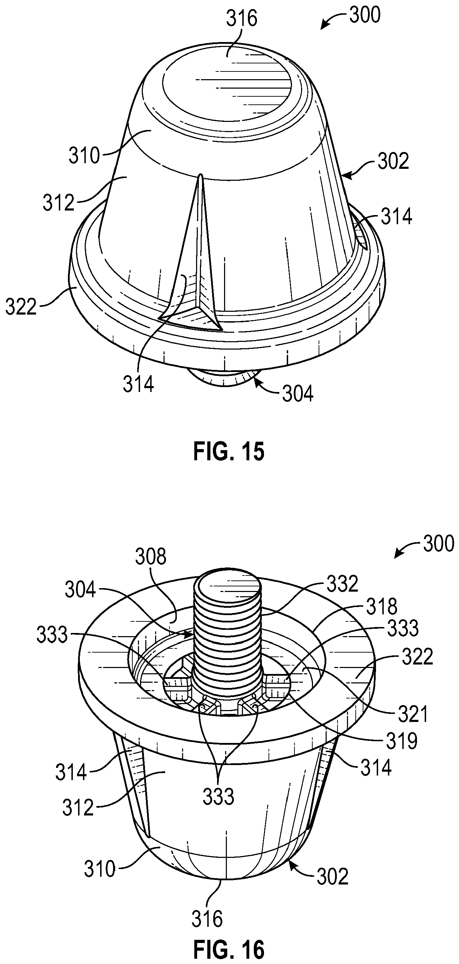

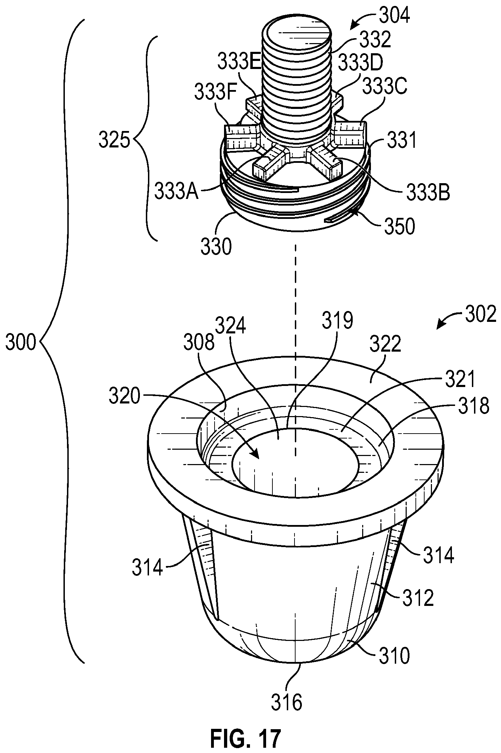

Referring to FIGS. **15-21****,** a third embodiment of the traction element, designated **300,** is illustrated. In some embodiments, the traction element **300** includes a stud body **302** having a generally thimble-shaped body configured to provide traction and gripping strength along a ground surface when attached to the sole of an athletic shoe. In some embodiments, the stud body **302** includes a metal insert **304** having a standard or reverse thread head that is driven and cuts the surface of the interior cavity **320** of the stud body **302** to establish a secure engagement between the distal cap **330** of the metal insert **304** and the stud body **302** during manufacture as shall be discussed in greater detail below. Similar to the other embodiments of the traction element **300,** the metal insert **304** is configured to mechanically couple the traction element **300** to the sole of an athletic shoe (not shown). Referring to FIGS. **17-****19, 20** and **21,** the stud body **302** defines a distal head portion **310** and a proximal end portion **312.** The proximal end portion **312** of the stud body **302** gradually tapers away from the distal head portion **310** and forms a peripheral flange **322** that defines an opening **318** in communication with an interior cavity **320** formed within the stud body **302.** As further shown, the distal head portion **310** defines a top end **316** of the traction element **300** that is configured to provide a traction surface along the sole of an athletic shoe (not shown) when the traction element **300** engages the ground or other athletic surface.

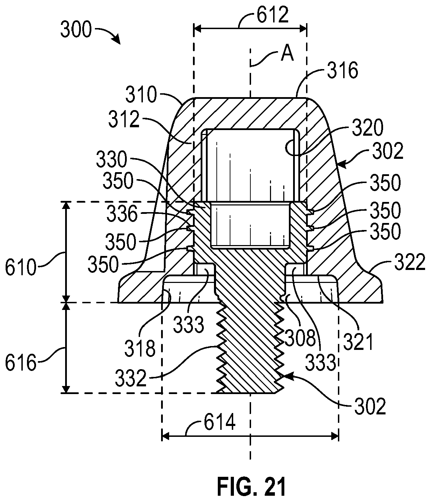

Referring to FIGS. **17** and **21****,** in some embodiments the metal insert **304** is made of steel and/or aluminum that forms an insert body **325** defining a distal cap **330** and a proximal threaded portion **332** that extends axially from the distal cap **330.** As noted above, the distal cap **330** forms external threads **350** that collectively form a standard or reverse thread head that may be driven into the interior cavity **320** of the stud body **302** such that the external threads **350** and insert internal threads **331** of the distal cap **330** cut directly into the interior surface of the stud body **302** to establish a secure engagement between the distal cap **330** of the metal insert **304** and the stud body **302** during manufacture. The interior cavity **320** defines a recess **308,** a first opening of the stud body **318,** a second opening of the stud body **319,** a shoulder **321,** and an interior surface **324.** Once engaged to the stud body **302,** the metal insert **304** should be centered and aligned along the longitudinal axis **A** of the stud body **302** and extends partially outward from the interior cavity **320** of the stud body **302.** As further shown, the metal insert **304** forms a plurality of drive grippers **333A, 333B, 333C, 333D, 333E, 333F** that extend radially extend outward from the proximal threaded portion **332** adjacent the distal cap **330** of the metal insert **304.** The plurality of drive grippers **333A-F**_are configured to engage a drive tool (not shown) that allows the metal insert **304** to be driven into permanent engagement with the stud body **302** as shall be described in greater detail below.

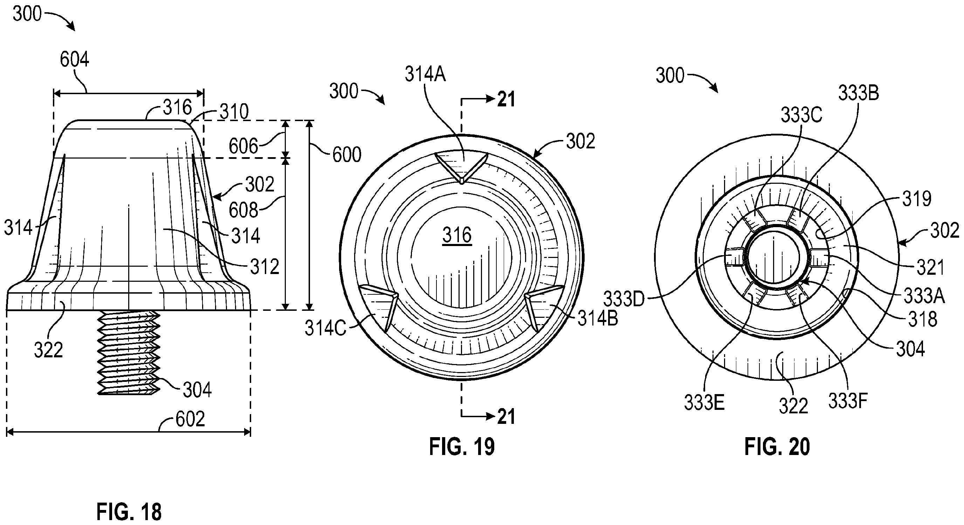

As shown specifically in FIGS. **18** and **19****,** in some embodiments a plurality of cutaways **314** may be formed axially along the outer surface of the stud body **302.** The plurality of cutaways **314** may be collectively configured to receive a driving tool (not shown), such as a cleat wrench, that engages each respective cutaway **314** such that rotation of the cleat wrench causes the stud body **302** to be manually rotated as the metal insert **304** becomes fully engaged to an engagement point formed along the sole of the athletic shoe. Referring specifically to FIG. **19****,** in some embodiments the stud body **302** may define three respective cutaways, **314A, 314B** and **314C** that each extend a distance axially along the surface of proximal end portion **312** of the stud body **302** and are spaced equidistantly relative to each other at a **120** degree angle. In other embodiments, two or more cutaways **314** may be formed along the stud body **302** to engage the cleat wrench when coupling the traction element **300** to the sole of the athletic shoe. In some embodiments, each cutaway **314** forms an elongated slot configuration forming a base proximate the peripheral flange **322** of the stud body **302** and two opposing sides that extend the length of the proximal end portion **312** and gradually taper to an apex formed at the top of each cutaway **314.** In other embodiments, the plurality of cutaways **314** may define a triangularly-shaped slot, a rectangular-shaped slot, a symmetrically-shaped slot, an asymmetrically-shaped slot, a circular-shaped slot, or a combination thereof.

In one method of manufacture, the stud body **302** of the traction element **300** may be cast from a metallic material, such as aluminum. The interior cavity **320** is formed inside the stud body **302** by coring out the interior portion of the stud body **302** during manufacturing according to method **800** as is discussed in FIGS. **22-31****.** In other embodiments, the interior cavity **320** may be machined when the stud body **302** has cooled. Once the interior cavity **320** is formed, a drive tool (not shown) is used to engage the plurality of drive grippers **333** of the metal insert **302** which are then rotated by the drive tool when the metal insert **304** is manually driven into the interior cavity **320** of the stud body **302.** The rotating action of the drive tool allows the external threads **350** of the metal insert **304** to act as a standard or reverse thread head that cuts directly into the interior surface of the stud body **302** to establish a secure engagement between the metal insert **304** and the stud body **302.** The engagement between the metal insert **304** and the stud body **302** produces a strong structural connection between the metal insert **304** and the stud body **302** such that shear forces applied to the traction element **300** during a sporting activity do not cause the metal insert **304** to break, bend or twist relative to the stud body **302.**

In some embodiments, the traction element **300** may be manufactured with the following dimensions used during manufacture. Referring to FIG. **18****,** the stud body **302** may have an overall length **600** of 15.0 mm and a width **602** of 16.0 mm. As further shown, the distal head portion **310** of the stud body **202** may have a width **604** of 12.2 mm and a length **606** of 4.0 mm, while the proximal end portion **312** of the stud body **302** may have a length **608** of 12.0 mm and a width **602** of 16.0 mm. Referring back to FIG. **21****,** the interior cavity **320** of the stud body **302** may have a length **610** of at least 7.5 mm and the opening **318** of the interior cavity **320** may have a length **614** of 13.0 mm. After the metal insert **304** is engaged with the stud body **302,** the proximal threaded portion **332** of the metal insert **304** will be aligned along the longitudinal axis **A** of the stud body **302** and extend outwardly from the opening **318** of the stud body **302** at a distance **616** of 6.5 mm. At its widest point, the head of the metal insert **304** may have a width **612** of 8.5 mm. The present disclosure contemplates that the dimensions of the stud body **302** and the metal insert **304** may vary to accommodate different shapes and sizes of traction elements used for different types of athletic shoes.

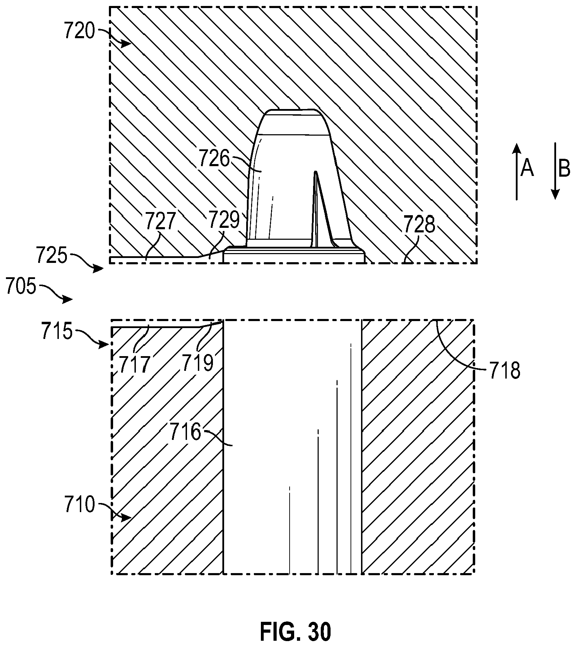

Referring to FIGS. **22-31****,** a tool assembly **700** for manufacturing a traction element **100/200/300** and associated method of manufacture **800** using the tool assembly **700** are illustrated. FIGS. **22-23I** show a cross-sectional view of the tool assembly **700.** The tool assembly **700** includes an upper component **720** that defines a casting cavity **726** and is configured for coupling and decoupling with a lower assembly **702.** The lower assembly **702** defines a lower component **710** that includes a holding steel component **750** configured to hold the metal insert **104/204/304** with the distal cap **130/230/330** of the metal insert **104/204/304** facing the upper component **720.** The lower assembly **702** further includes a core steel component **740** that provides a "core" for coring out the interior cavity **120/220/320** of the stud body **102/202/302** of the traction element **100/200/300.** With this arrangement, the metal insert **102/202/302** is positioned within the casting cavity **726** as the stud body **102/202/302** is cast around the metal insert **102/202/302** and the core steel component **740.** Referring to FIG. **30****,** the casting material is injected into the casting cavity **726** through a runner **705** collectively defined by an upper runner **725** of the upper component **720** and a lower runner **715** of the lower component **710.** The casted stud body **102/202/302** is subsequently allowed to cool within the casting cavity **726** until the stud body **102/202/302** forms a shell. Due to the cored-out interior cavity **120/220/320,** the stud body **102/202/302** cools much faster than a stud body without the cored-out interior cavity **120/220/320.** In one embodiment, the stud body **102/202/302** was found to use about 35% less casting material and was found to yield a similar improvement in cycling time. The lower assembly **702** further includes an ejector sleeve component **730** that contacts and ejects a cooled traction element **100/200/300** having been formed within the interior cavity **120/220/320.** Referring back to FIG. **22****,** the ejector sleeve component **730,** core steel component **740** and holding steel component **750** are concentrically arranged within the lower component **710** of the lower assembly **702** that contacts the upper component **720,** as shown.

In some embodiments, the moving components of the tool assembly **700** include but are not limited to the upper component **720,** the lower assembly **710** and the ejector sleeve component **730.** These moving components are controlled by a controller device **704** in electrical communication with one or more actuators **706** that enable linear motion in the first axial direction **A** and the opposite second axial direction **B.** In other embodiments, the moving components of the tool assembly **700** can be manually actuated in the first axial direction **A** and the opposite second axial direction **B.** In some embodiments, the tool assembly **700** can be one of an array having a plurality of tool assemblies **700** (not shown) for rapid manufacture of a plurality of traction elements **100/200/300.**

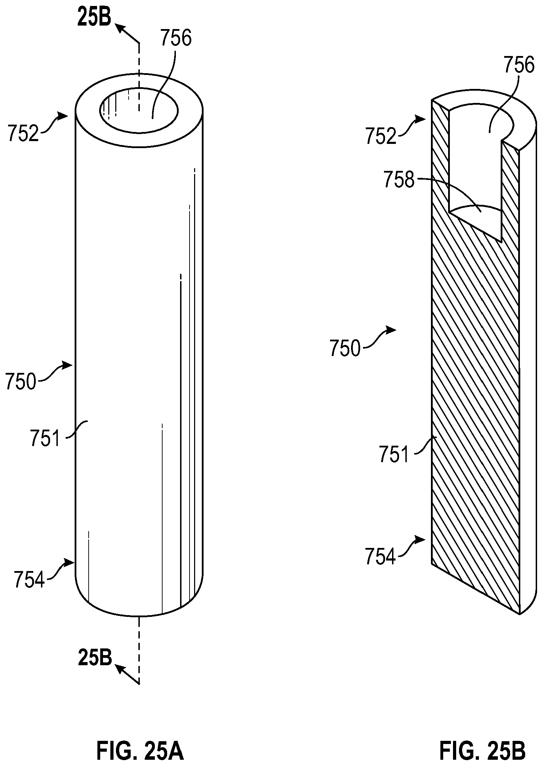

FIGS. **25A** and **25B** illustrate the holding steel component **750** defining a generally cylindrical body **751** having a distal portion **752** and a proximal portion **754.** The distal portion **752** defines a holding cavity **756** for receipt of the metal insert **104/204/304** and an abutment **758** defining an end of the holding cavity **756** for supporting the metal insert **104/204/304** within the holding steel component **750.** As shown in FIG. **22****,** the holding steel component **750** is configured for insertion within the core steel component **740** within the lower assembly **702.** The holding steel component **750** receives and secures the proximal threaded portion **132/232/332** of the metal insert **104/204/304** within the holding cavity **756** to orient the distal cap **130/230/330** of the metal insert **104/204/304** towards the upper component **720.** In some embodiments, the holding cavity **756** of the holding steel component **750** can be of varying diameter or length to accommodate differences in metal insert diameter and length.

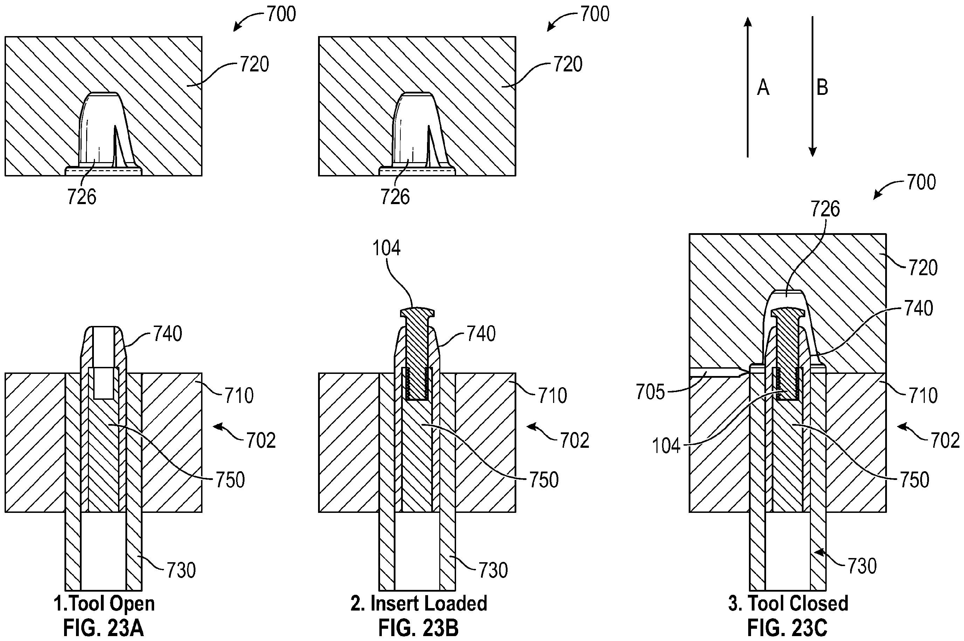

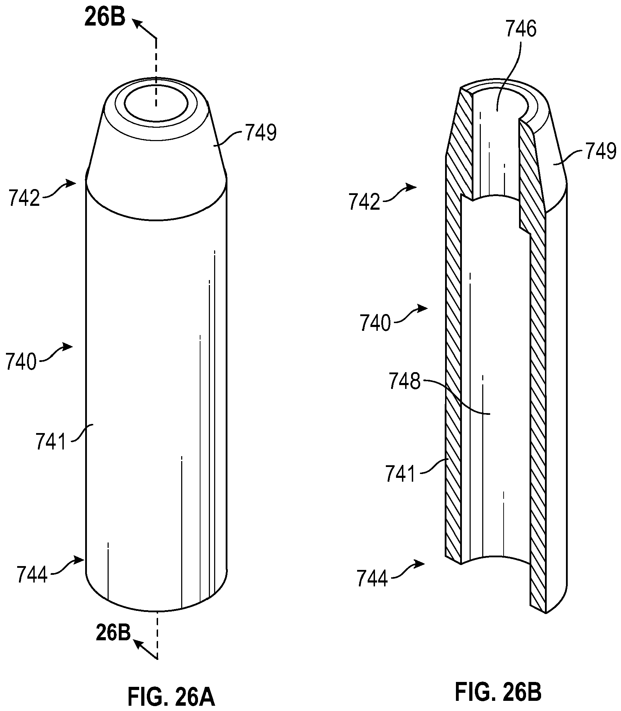

FIGS. **26A** and **26B** illustrate the core steel component **740** defining a generally cylindrical body **741** having a distal portion **742** and an opposite proximal portion **744.** In particular, the core steel component **740** is configured to envelop the holding steel component **750** in a coaxial alignment and provide a core for coring out the interior cavity **120/220/320** of the traction element **100/200/300.** The distal portion **742** of the coring steel component **740** defines a tapered coring surface **749** that terminates in an open tip **746.** The tapered coring surface **749** provides a mold for coring the interior cavity **120/220/320** of the stud body **102/202/302** during casting of the stud body **102/202/302.** The interior of the core steel component **740** includes a core steel channel **748** that communicates with the open tip **746** and is configured to receive the holding steel component **750.** While assembled, the core steel channel **748** of the core steel component **740** envelops the distal portion **752** of the holding steel component **750** and the open tip **746** aligns with the holding cavity **756** of the holding steel component **750.** As shown in FIG. **22****,** the open tip **746** has same diameter as the holding cavity **756,** and as further illustrated in FIG. **23B****,** the metal insert **104/204/304** is secured within both the open tip **746** and the holding cavity **756.** In some embodiments, the tapered coring surface **749** can be of varying shape, width, roundness, and length to accommodate differences in the stud body **102/202/302.** Further, in some embodiments the open tip **746** of the core steel component **740** can be of varying diameter or length to accommodate differences in metal insert diameter and length.

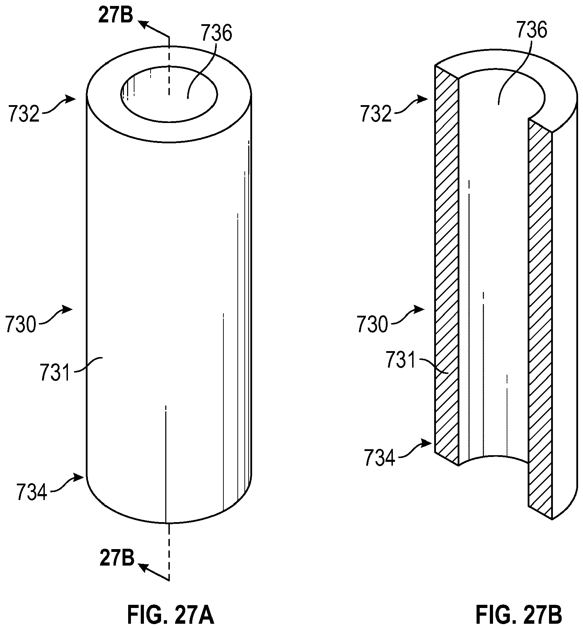

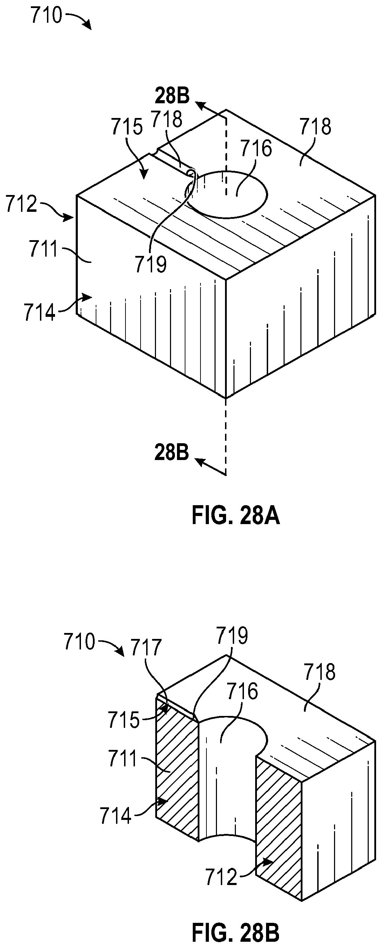

FIGS. **27A** and **27B** illustrate the ejector sleeve component **730** of the tool assembly **700** defining a tubular body **731** having a distal portion **732** and a proximal portion **734** and further defining an open channel **736** along the direction of elongation of the ejector sleeve component **730.** The ejector sleeve component **730** is configured to eject a casted traction element **100/200/300** formed by the tool assembly **700.** The ejector sleeve component **730** is located within the lower assembly **702** external to the core steel component **740** such that the core steel component **740** is in coaxial alignment with the ejector sleeve component **730.** In particular, the core steel component **740** (and the holding steel component **750** within the core steel component **740)** is positioned within the channel **736** of the ejector sleeve component **730.** The ejector sleeve component **730** is positioned within and coaxially aligned with a central channel **716** (FIGS. **28A** and **28B****)** of the lower component **710.**

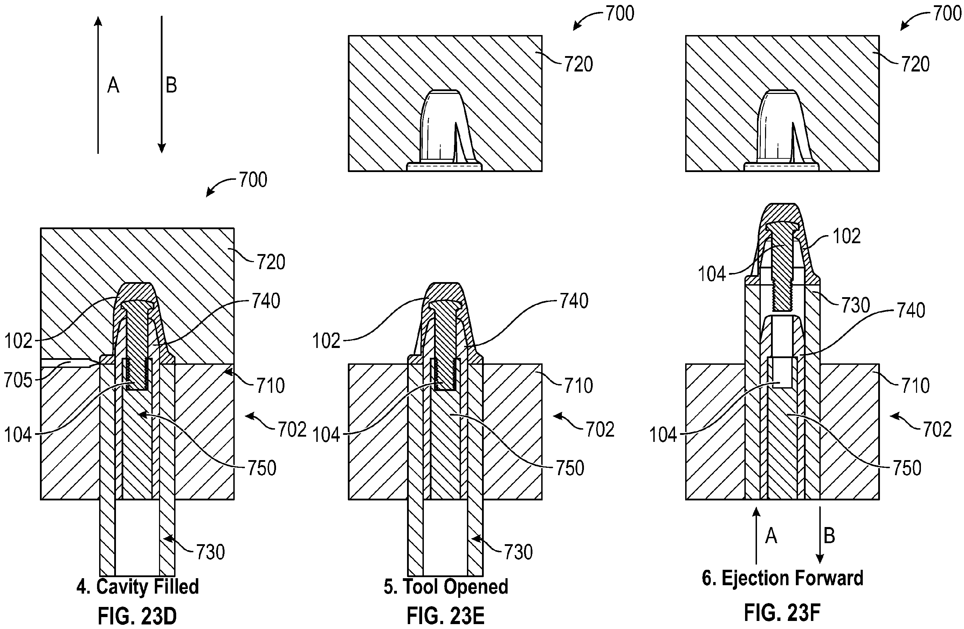

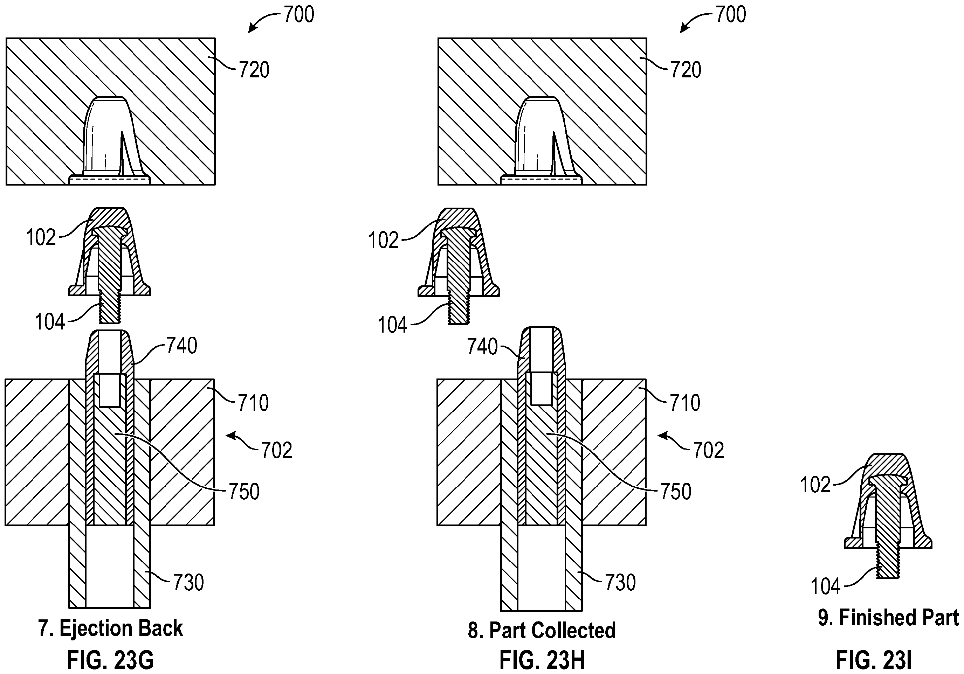

In some embodiments, as shown in FIGS. **23F** and **23G****,** the ejector sleeve component **730** is operable for motion in a first axial direction **A** and an opposite second axial direction **B.** As shown in FIG. **23F****,** the ejector sleeve component **730** is operable to slide in the first axial direction **A** following casting of the traction element **100/200/300** and push the traction element **100/200/300** away from the core steel component **730** until the metal insert **104/204/304** is fully dislodged from the open tip **746** and the holding cavity **756** (FIG. **22****).** As shown in FIG. **23G****,** the ejector sleeve component **730** is operable to slide back into the lower component **710** of the lower assembly in the second axial direction **B** following ejection of the traction element **100/200/300.**

Referring to FIGS. **22****,** **28A** and **28B****,** the lower component **710** is illustrated defining a generally block-shaped body **711** that includes the central channel **716** for receipt of the ejector sleeve component **730,** the core steel component **740,** and the holding steel component **750.** The ejector sleeve component **730,** the core steel component **740,** and the holding steel component **750** are all in coaxial alignment with the central channel **716.** The lower component **710** includes a distal portion **712** defining a distal surface **718** that contacts a proximal surface **728** of the upper component **720.** The distal surface **718** further defines the lower runner **715** on the distal surface **718** that provides a conduit for introducing the casting material into the casting cavity **726** of the upper component **720.** In some embodiments, the lower runner **715** includes a runner channel **717** that terminates in a gate **719** that feeds casting material into the casting cavity **726** of the upper component **720.** During casting, the casting material is fed into the casting cavity **726** until sufficient pressure is achieved within the casting cavity to ensure the casting material is sufficiently packed.

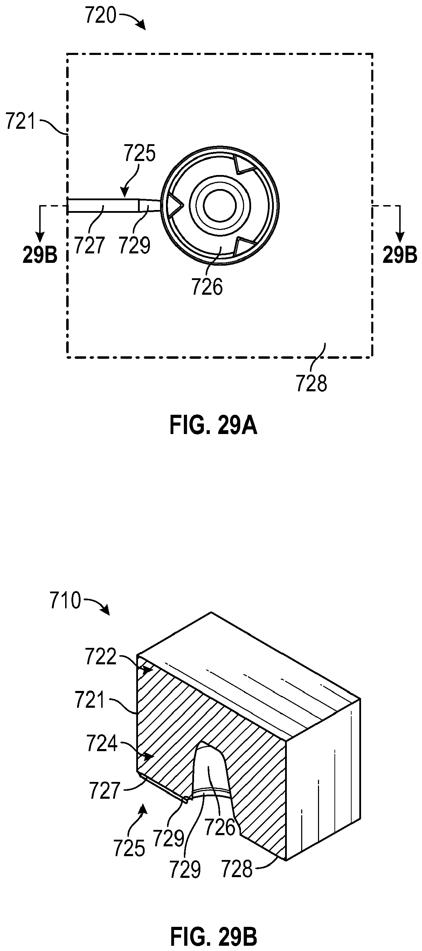

Referring to FIGS. **29A** and **29B****,** the upper component **720** is illustrated defining a generally block-shaped body **721** defining a proximal portion **724** and an opposite distal portion 722. The upper component **720** includes a proximal surface **728** associated with the proximal portion **724** and the casting cavity **726** that defines a mold for the stud body **102/202/302** of the traction element **100/200/300.** The casting cavity **726** includes features on a surface of the casting cavity **726** that define various features of the stud body **102/202/302** including the plurality of cutaways **114** on the outer surface of the stud body **102/202/302.** As shown, the casting cavity **726** can include cutaway protrusions **723A-723C** that form cutaways **114** on the stud body **102/202/302** when the stud body **102/202/302** is cast within the casting cavity **726.** The casting cavity **726** can further include a flange slot **733** for forming the peripheral flange **122/222/322** of the stud body **102/202/302.** The upper component **720** can further include the upper runner **725** along the proximal surface **728** that aligns with the lower runner **715** to provide a conduit for introducing the casting material into the casting cavity **726.** In some embodiments, the upper runner **725** includes a runner channel **727** that terminates in a gate **729** that feeds casting material into the casting cavity **726** of the upper component **720.** The upper runner **725** and the lower runner **715** of the lower component **710** collectively define the runner **705** (FIG. **30****)** which in some embodiments is 3/8" in diameter when assembled.

The upper component **720** is operable for motion in the first axial direction **A** and the opposite second axial direction **B.** In particular, as shown in FIGS. **23B** and **23C****,** the upper component **720** is operable for motion in the second axial direction **B** following insertion of the metal insert **104/204/304** until the proximal surface **728** (FIG. **22****)** of the upper component **720** engages the distal surface **718** (FIG. **22****).** of the lower component **710** such that the molding cavity **726** is positioned around the coring steel component **740** of the lower assembly **702** and the metal insert **104/204/304** to assume a closed position of the tool assembly. As further shown in FIGS. **23D** and **23E****,** following casting and cooling of the stud body **102/202/302,** the upper component **720** is operable for motion in the first axial direction **A** to assume an open position of the tool assembly **700** and enable ejection of the traction element **100/200/300.**

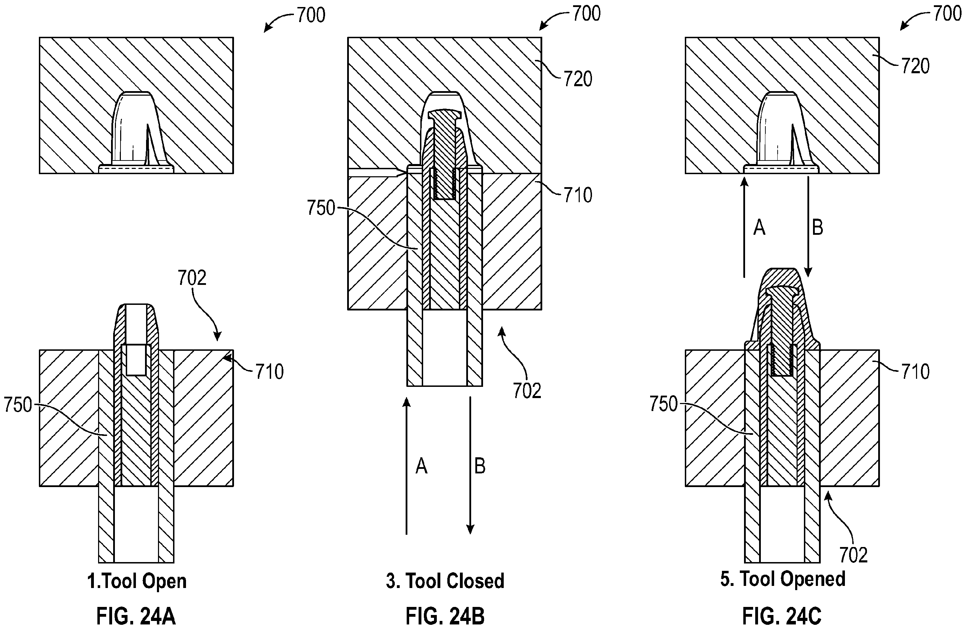

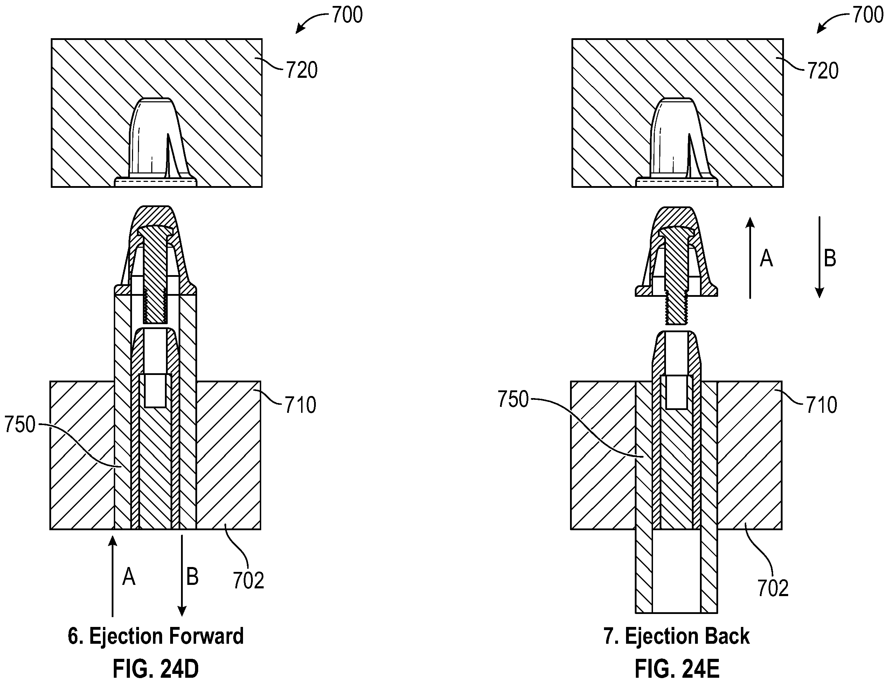

It should be noted that in some embodiments, as described above, the tool assembly **700** can be opened or closed by actuating the upper component **720** in the first direction **A** or the opposite second direction **B** relative to the lower assembly **710,** while the lower assembly **710** remains stationary. In other embodiments, such as the embodiment of FIGS. **24A-24E****,** the tool assembly **700** can be opened or closed by actuating the lower assembly **702** in the second direction **B** or the first direction **A** relative to the upper component **720,** while the upper component **720** remains stationary. In a further embodiment, the tool assembly **700** can be opened or closed by actuating the upper component **720** in the first direction **A** or the opposite second direction **B** relative to the lower assembly **710,** while the lower assembly **710** is actuated in the second direction **B** or the first direction **A** relative to the upper component **720** to engage the upper component **720** in the middle.

In some embodiments, each component of the tool assembly **700** including the holding steel component **750,** the core steel component **740,** the ejector sleeve component **730,** the lower component **710** and the upper component **720** are manufactured from an assortment of tool steel. In one embodiment, components that couple to form a tight seal, such as the lower component **710** and the upper component **720,** can be made of S7 or another type of suitable tool steel. The ejector sleeve component **730** slides between the lower component **710** and the core steel component **740,** which remain fixed relative to one another. Thus, it is contemplated that the ejector sleeve component **730** can be manufactured of harder steel than the lower component **710** and the core steel component **740** such as A2 or D2 steel. The core steel component **740** and holding steel component **750** remain stationary relative to one another, and do not contact the lower component **710** or upper component **720** directly; thus the core steel component **740** and holding steel component **750** can also be made of S7 or another type of suitable tool steel that is softer than that of the ejector sleeve component **740.**

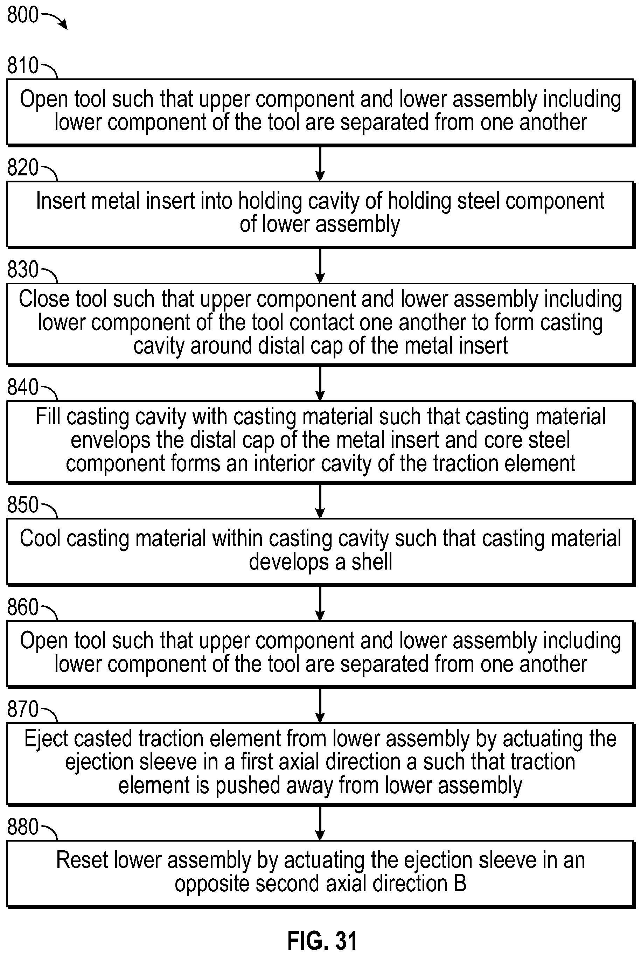

FIGS. **23A-23I** illustrate one method of manufacture **800** (FIG. **31****)** of the traction element **100/200/300.** In FIG. **23A****,** the tool assembly **700** assumes an open position with the upper component **720** being oriented above the lower assembly **702** with the casting cavity **726** oriented towards the lower assembly **702** and the upper component **720** and lower assembly **702** are separated from one another. In FIG. **23B****,** the metal insert **104/204/304** of the traction element **100/200/300** is inserted into the holding steel component **740** and the core steel component **730.** In FIG. **23C****,** the tool assembly **700** assumes a closed position such that the upper component **720** and the lower assembly **702** including the lower component **710** contact one another to form the casting cavity **726** around the distal cap **130/230/330** of the metal insert **104/204/304.** In FIG. **23D****,** the casting cavity **726** is filled in by injecting casting material through the runner **705** collectively defined by the upper runner **725** and the lower runner **715** and into the casting cavity **726** (FIG. **30****)** of the upper component **720.** The casting material that forms the stud body **102/202/302** is cast around the distal cap **130/230/330** of the metal insert **104/204/304** such that the metal insert **104/204/304** is permanently coupled to the stud body **102/202/302.** The casting material fills the casting cavity **726** around the core steel component **740,** thus forming the interior cavity **120/220/320** of the traction element **100/200/300** by coring rather than boring or drilling away at the stud body **102/202/302** to remove casting material. Once the casting cavity **726** is filled with casting material and the casting material in the form of the stud body **102/202/302** has sufficiently cooled enough to form a hardened shell, then as shown in FIG. **23E** the tool assembly **700** is opened to expose the traction element **100/200/300** including the stud body **102/202/302** and the metal insert **104/204/304.** As shown in FIG. **23F****,** the ejector sleeve component **730** is actuated in the first axial direction **A** relative to the lower component **710** such that the proximal threaded portion **132/232/332** of the metal insert **104/204/304** is pushed out of the holding steel component **750** and core steel component **740.** As further illustrated in FIG. **23F****,** the ejector sleeve component **730** is retracted back into the lower component **710** and the traction element **100/200/300** is released as the tool assembly **700** is reset. FIGS. **23H** and **23I** illustrate collection of the finished traction element **100/200/300** including the stud body **102/202/302,** the metal insert **104/204/304** and the interior cavity **120/220/320.**

FIG. **31** illustrates a process flow for the method of manufacture **800** of a traction element **100/200/300** using the tool assembly **700** using the aforementioned coring process. At block **810** corresponding with FIG. **23A****,** the tool assembly **700** assumes an open position such that the upper component **720** and the lower assembly **702** including the lower component **710** are separated from one another. At block **820** corresponding with FIG. **23B****,** the proximal threaded portion **132/232/332** of the metal insert **104/204/304** is inserted into the holding cavity **756** of the holding steel component **750** of the lower assembly **710.** At block **830** corresponding with FIG. **23C****,** the tool assembly **700** assumes a closed position such that the upper component **720** and the lower assembly **702** including the lower component **710** of the tool assembly **700** contact one another to form the casting cavity **726** around the distal cap **130/230/330** of the metal insert **104/204/304.** At block **840** corresponding with FIG. **23D****,** the casting cavity **726** is filled with casting material to form the stud body **102/202/302.** The casting material envelops the distal cap **130/230/330** of the metal insert **104/204/304** and the core steel component **740,** forming the interior cavity **120/220/320** of the stud body **102/202/302.** At block **850,** the casted material forming the stud body **102/202/302** is allowed to cool within the casting cavity **726** until the casting material develops a shell. At block **860** corresponding with FIG. **23E****,** the tool assembly **700** is opened such that the upper component **720** and the lower assembly **702** including the lower component **710** are separated from one another. At block **870** corresponding with FIG. **23F****,** the casted traction element **100/200/300** is ejected from the lower assembly **710** by actuating the ejector sleeve component **730** in a first axial direction **A** relative to the lower component **710** such that the traction element **100/200/300** is pushed away from the lower assembly **702.** The traction element **100/200/300** can then be collected. At block **880,** the lower assembly **702** of the tool assembly **700** is reset by actuating the ejector sleeve component **730** in the opposite second axial direction **B** relative to the lower component **710.**

It should be understood from the foregoing that, while particular embodiments have been illustrated and described, various modifications can be made thereto without departing from the spirit and scope of the invention as will be apparent to those skilled in the art. Such changes and modifications are within the scope and teachings of this invention as defined in the claims appended hereto.

## Claims

1. A method of manufacturing a traction element comprising:
injecting a casting material into a casting cavity to form a stud body of a traction element from the casting material around a distal cap of a metal insert such that the metal insert is permanently coupled to the stud body, wherein the casting material is formed around a tapered coring surface of a core steel component such that an interior cavity is formed within the stud body around a shaft portion of the metal insert.

2. The method of claim 1, further comprising:
forming a plurality of cutaways along an outer surface of the stud body.

3. The method of claim 1, further comprising:
filling the interior cavity external to the metal insert with a filler material to form a retainer that provides structural support between the metal insert and an interior surface of the interior cavity of the stud body

4. The method of claim 3, wherein the metal insert comprises a bulbous portion formed between the shaft portion and a proximal threaded portion of the metal insert and being configured to engage a retainer for retaining the proximal threaded portion of the metal insert in a fixed position within the stud body.

5. The method of claim 4, wherein the retainer defines an opening around the metal insert at the proximal end portion of the stud body that communicates with a portion of the metal insert that is not in contact with the retainer.

6. A method, comprising:
providing a metal insert including a shaft portion formed between a distal cap and a proximal threaded portion;
providing a tool assembly for manufacture of a traction element, the tool assembly defining:
an upper component including a proximal surface that defines a casting cavity, wherein the casting cavity defines a mold for a stud body of the traction element;
a lower assembly positioned proximal to the upper component, the lower assembly including:
a lower component, the lower component including a distal surface and a central channel along the direction of elongation, wherein the distal surface is oriented towards the proximal surface of the upper component;
a core steel component including a distal portion defining a tapered coring surface that terminates in an open tip and further defining a core steel channel along the direction of elongation that communicates with the open tip, wherein the core steel component is positioned within the central channel of the lower component; and
a holding steel component positioned in coaxial alignment within the core steel channel and defining a holding cavity for receipt of the proximal threaded portion of the metal insert;
wherein the tool assembly is operable to close by actuating the upper component or the lower assembly in a first or second axial direction such that the distal portion of the lower component and the proximal portion of the upper component contact one another; and
inserting the proximal threaded portion of the metal insert into the holding cavity of the holding steel component and the open tip of the core component such that the distal cap of the metal insert faces the casting cavity of the upper component;
closing the tool assembly such that the proximal surface of the upper component contacts the distal surface of the lower component and the casting cavity envelops the distal cap of the metal insert; and
injecting a casting material into the casting cavity to form the stud body from the casting material around the distal cap of the metal insert such that the metal insert is permanently coupled to the stud body, wherein the casting material is formed around the tapered coring surface of the core steel component such that an interior cavity is formed within the stud body around the metal insert.

7. The method of claim 6, wherein the lower assembly further includes an ejector sleeve component defining an open channel, wherein the core steel component and holding steel component are positioned in coaxial alignment within the open channel, and wherein the ejector sleeve component is configured to contact and eject a formed traction element from the lower assembly.

8. The method of claim 7, further comprising:
ejecting the traction element by actuating the ejection sleeve in a first axial direction such that the ejection sleeve contacts the stud body and pushes the stud body in the first axial direction until the proximal threaded portion of the metal insert of the traction element is removed from the holding cavity of the holding steel component.

9. The method of claim 6, further comprising:
allowing the stud body to cool within the casting cavity.

10. The method of claim 6, further comprising:
opening the tool assembly by actuating the upper component or the lower assembly in a first or second axial direction such that the upper component and the lower assembly are separated from one another.

11. The method of claim 6, wherein the casting cavity includes a cutaway protrusion to form a cutaway on an outer surface of the stud body.

12. The method of claim 6, wherein the lower component further includes a lower runner defined along the distal surface of the lower component and wherein the upper component further includes an upper runner defined along the proximal surface of the upper component such that when the tool assembly is closed, the lower runner and upper runner collectively form a runner, wherein the runner is in fluid flow communication with the casting cavity and wherein casting material is fed into the casting cavity through the runner.

13. A system, comprising:
a tool assembly for manufacture of a traction element defining:
an upper component including a proximal surface that defines a casting cavity, wherein the casting cavity defines a mold for a stud body of the traction element;
a lower assembly positioned proximal to the upper component, the lower assembly including:
a lower component, the lower component including a distal surface and a central channel along the direction of elongation, wherein the distal surface is oriented towards the proximal surface of the upper component;
a core steel component including a distal portion defining a tapered coring surface that terminates in an open tip and further defining a core steel channel along the direction of elongation that communicates with the open tip, wherein the core steel component is positioned within the central channel of the lower component; and
a holding steel component positioned in coaxial alignment within the core steel channel and defining a holding cavity for receipt of the proximal threaded portion of a metal insert;
wherein the tool assembly is operable to close by actuating the upper component or the lower assembly in a first or second axial direction such that the distal portion of the lower component and the proximal portion of the upper component contact one another.

14. The system of claim 13, wherein the tool assembly is operable to:
receive a proximal threaded portion of the metal insert into the holding cavity of the holding steel component and the open tip of the core component such that a distal cap of the metal insert faces the casting cavity of the upper component;
assume a closed position such that the proximal surface of the upper component contacts the distal surface of the lower component and the casting cavity envelops the distal cap of the metal insert; and
receive a casting material into the casting cavity to form the stud body from the casting material around the distal cap of the metal insert such that the metal insert is permanently coupled to the stud body, wherein the casting material is formed around the tapered coring surface of the core steel component such that an interior cavity is formed within the stud body around the metal insert.

15. The system of claim 13, wherein the lower assembly further includes an ejector sleeve component defining an open channel, wherein the core steel component and holding steel component are positioned in coaxial alignment within the open channel, and wherein the ejector sleeve component is configured to contact and eject a formed traction element from the lower assembly.

16. The system of claim 15, wherein the tool assembly is further operable to:
eject the traction element by actuating the ejection sleeve in a first axial direction such that the ejection sleeve contacts the stud body and pushes the stud body in the first axial direction until the proximal threaded portion of the metal insert of the traction element is removed from the holding cavity of the holding steel component.

17. The system of claim 13, wherein the stud body is allowed to cool within the casting cavity.

18. The system of claim 13, wherein the tool assembly is configured to:
assume an open position by actuating the upper component or the lower assembly in a first or second axial direction such that the upper component and the lower assembly are separated from one another.

19. The system of claim 13, wherein the casting cavity includes a cutaway protrusion to form a cutaway on an outer surface of the stud body.

20. The system of claim 13, wherein the lower component further includes a lower runner defined along the distal surface of the lower component and wherein the upper component further includes an upper runner defined along the proximal surface of the upper component such that when the tool assembly is closed, the lower runner and upper runner collectively form a runner, wherein the runner is in fluid flow communication with the casting cavity and wherein casting material is fed into the casting cavity through the runner.
